# EUROPÄISCHE PATENTANMELDUNG

(11) **EP 0 568 961 A2**
(43) Veröffentlichungstag der Anmeldung: **10.11.1993**
(21) Anmeldenummer: 93107174.0
(22) Anmeldetag: 03.05.1993
(51) Int. Cl.: A01F 29/00

(54) **Ballenhäcksler**

(30) Priorität: 04.05.1992 DE 4214749
(71) Anmelder: BISO B.V., NL-4707 BX Roosendaal (NL)
(72) Erfinder: Freyer, Hans-Jürgen, W-4520 Melle 1 (DE)
(74) Vertreter: Zinnecker, Armin, Dipl.-Ing.

(57) **Zusammenfassung**

Ein Ballenhäcksler besitzt ein in einem Gehäuse (9) umlaufendes Schneidflügelrad (15), welches mit Förderwerkzeugen (16) versehen ist. Um einen einfach aufgebauten Ballenhäcksler mit einer verbesserten Häckselwirkung zu schaffen, ist das Schneidflügelrad (15) mit Schneidwerkzeugen (19), vorzugsweise pendelartig angeordneten Schlegelmessern, versehen. Vorzugsweise sind an dem Gehäuse (9) nach innen ragende Gegenmesser (20) angeordnet.

## Beschreibung

Die Erfindung betrifft einen Ballenhäcksler nach dem Oberbegriff des Anspruchs 1.

Ein derartiger Ballenhäcksler ist aus der US-PS 30 35 621 bekannt.

Aus der EP-OS bzw. EP-PS 307 159 ist ein Ballenhäcksler bekannt, der eine rotierende Trommel zum Aufnehmen eines zu häckselnden bzw. zu zerreißenden Ballens und eine aus rotierenden Schneidklingen bestehende Schneideinreichtung aufweist.

Die DE-OS 35 35 437 offenbart einen Ballenhäcksler mit einer um eine vertikale Achse drehbar gelagerten Trommel zur Aufnahme eines Ballens und einem in dem Boden der Trommel versenkten Gehäuse mit einem Schneidflügelrad, das um eine ebenfalls vertikale, gegenüber der Trommel-Rotationsachse versetzte Drehachse rotiert.

Aus der DE-OS 32 01 651 ist ein Ballenhäcksler bekannt, der ebenfalls eine um eine vertikale Achse rotierende Trommel, die den Ballen in eine Drehbewegung versetzt, aufweist.

Die US-PS 44 85 976 offenbart einen Ballenhäcksler mit einer Trommel, die um eine gegenüber der Vertikalen geneigte Achse rotiert und dadurch einen in ihr befindlichen Ballen in eine Drehbewegung versetzt.

Die DE-OS 25 51 271 zeigt ein bewegliches Hackschnitzelgerät, das mit einem Zugfahrzeug verbunden werden kann und das einen Hackschnitzelbehälter, einen Zerhacker mit einer Speisevorrichtung, eine Hebevorrichtung sowie ein Hackschnitzelüberleitungsrohr, das den Zerhacker mit dem Hackschnitzelbehälter verbindet, aufweist.

Aus der DE-GM 88 13 158 ist eine Vorrichtung zum Häckseln von Stroh bekannt, bei der auf einer rotierenden Scheibe feststehende Schneidmesser befestigt sind.

Die US-PS 25 61 069 zeigt einen Ballenhäcksler mit einer um eine horizontale, quer zur Ballen-Zuführrichtung verlaufenden Messertrommel, an deren Umfangsfläche als Messer ausgebildete Schneidwerkzeuge angeordnet sind. Im Gehäuse sind Gegenmesser vorgesehen.

Aufgabe der Erfindung ist es, einen einfach aufgebauten Ballenhäcksler mit einer verbesserten Häckselwirkung vorzuschlagen.

Erfindungsgemäß wird diese Aufgabe durch die im kennzeichnenden Teil des Anspruchs 1 angegebenen Merkmale gelöst. Das Schneidflügelrad ist mit Schneidwerkzeugen versehen, wobei diese Schneidwerkzeuge vorzugsweise als pendelartig angeordnete Schlegelmesser ausgebildet sind. Diese Schlegelmesser sind vorzugsweise um parallel zur Drehachse des Schneidflügelrades verlaufende Achsen schwenkbar. Sie können hintereinander angeordnet und pendelnd gelagert sein. Ferner sind die Schneidwerkzeuge bzw. Schlegelmesser an den radial äußeren Enden des Schneidflügelrades angebracht.

Das das Schneidflügelrad an seinem Umfang umgebende Gehäuse kann aus einem im wesentlichen zylinderförmigen, mit der Drehachse des Schneidflügelrades konzentrischen Mantel bestehen. Vorzugsweise verläuft die Drehachse des Schneidflügelrades im wesentlichen horizontal. Durch das Schneidflügelrad wird die Häckselwirkung verbessert. Der Ballenhäcksler kann für Ballen aus Stroh, Heu oder Silage und auch für sonstige Ballen eingesetzt werden. Er ist geeignet für Ballen in Ouaderform oder in Zylinderform, aber auch für Ballen in sonstigen Formen.

Vorteilhafte Weiterbildungen sind in den Unteransprüchen beschrieben.

Vorzugsweise sind an dem Gehäuse bzw. dessen Umfang radial nach innen tragende bzw. weisende Gegenmesser bzw. Gegenschneiden vorgesehen. Die Gegenmesser können in den Messerkreis der Schneidwerkzeuge hineinragen. Sie sind dann zwischen den Schneidwerkzeugen angeordnet.

Die Gegenmesser können in einem oder mehreren Messerkästen angeordnet sein. Über den Umfang des Gehäuses können mehrere Messerkästen vorgesehen sein.

Vorzugsweise sind die Gegenmesser schwenkbar und in verschiedenen Schwenklagen arretierbar und/oder in radialer Richtung zustellbar, so daß die Winkelstellung und Lage der Gegenmesser für optimale Schnittverhältnisse varriert werden können.

Nach einer weiteren vorteilhaften Weiterbildung sind in dem Gehäuse radial nach innen weisende, stufenförmige Erhebungen vorgesehen, die vorzugsweise in Drehrichtung des Schneidflügelrades vor den Gegenmessern angeordnet sind. Diese stufenförmigen Erhebungen, die den Gegenmessern vorgeschaltet sind, bewirken eine gegenüber einer glatten Gehäusewand erheblich verbesserte Häckselwirkung, da sie in der Drehrichtung des Schneidflügelrades geförderte Halme querrichten, so daß diese dann von den Schneidwerkzeugen erfaßt werden können.

Die Erhebungen können in die Gehäusewand integriert sein und/oder von gesonderten Anschlägen gebildet werden, beispielsweise von aufgeschraubten Winkelprofilen. Die in die Gehäusewand integrierten Erhebungen können durch entsprechende Abkantungen in der Gehäusewand gebildet werden.

Nach einer weiteren vorteilhaften Weiterbildung sind die Schneiden der Schneidwerkzeuge bzw. Schlegelmesser und/oder die Schneiden der Gegenmesser verzahnt. Durch diese Verzahnung kann die Standzeit der Schneiden verlängert werden.

Die Förderwerkzeuge können als eine oder mehrere Schaufeln ausgebildet sein. Vorzugsweise verlaufen diese Schaufeln in radialer Richtung geneigt. Durch diese Neigung der Schaufeln wird ein Austrittswinkel für das Häckselgut gebildet.

Nach einer weiteren vorteilhaften Weiterbildung ist der Neigungswinkel der Schaufeln veränderbar, vorzugsweise dadurch, daß die Schaufeln verschwenkbar sind. Durch die Veränderung des Neigungswinkels der Schaufeln kann der Austrittswinkel des Häckselgutes veränderbar bzw. variierbar sein. Die Verschwenkung der Schaufeln erfolgt vorzugsweise um eine radial innen liegende Schwenkachse, die parallel zur Drehachse des Schneidflügelrades und vorzugsweise von dieser beabstandet ist.

Das Schneidflügelrad ist von einem Gehäuse umgeben. In dem Gehäuse des Schneidflügelrades können eine oder mehrere Auswurföffnungen zum Auswerfen des gehäckselten Guts vorgesehen sein. Vorzugsweise weisen die Auswurföffnungen radial nach außen. Die Auswurföffnungen können in entgegengesetzte Richtungen weisen. Zur Regulierung der Wurfweite können an den Auswurföffnungen schwenkbare Auswurfkanäle oder sonstige Leiteinrichtungen angebracht werden.

Nach einer weiteren vorteilhaften Weiterbildung weist das Schneidflügelrad eine Scheibe auf, an der die Schaufeln angebracht sind. Die Scheibe kann senkrecht zur Drehachse des Schneidflügelrades, also in dessen Rotationsebene, angeordnet sein.

Eine weitere vorteilhafte Weiterbildung ist gekennzeichnet durch ein vorzugsweise koaxial zur Drehachse des Schneidflügelrades drehbares Messerrad, an dem eine Vielzahl von Messerklingen angebracht ist. Das Messerrad ist vorzugsweise in axialer Richtung vor dem Schneidflügelrad, also auf der dem Ballen zugewandten Seite des Schneidflügelrades, angeordnet, wobei die Drehachse des Messerrades vorzugsweise mit der Drehachse des Schneidflügelrades fluchtet und wobei das Messerrad vorzugsweise in einer mit dem Schneidflügelrad gleichsinnigen Richtung angetrieben ist.

Vorzugsweise ist das Messerrad von einem Gehäuse umgeben. Dieses Gehäuse kann dasselbe Gehäuse sein wie das Gehäuse des Schneidflügelrades. Gebläserad und Schneidflügelrad können also von demselben Gehäuse umgeben sein.

Eine weitere vorteilhafte Weiterbildung ist dadurch gekennzeichnet, daß die in der Drehrichtung des Messerrades vorlaufenden Schneidkanten der Messerklingen in Richtung radial nach außen in Drehrichtung nachlaufend verlaufen. Die Schneidkanten der Messerklingen erstrecken sich also nicht radial nach außen, sondern in Richtung radial nach außen nach hinten. Hierdurch wird die Schneidwirkung bzw. Häckselwirkung verbessert.

Vorteilhaft ist es, wenn die Messerklingen in Richtung radial nach außen von der Rotationsebene des Messerrades nach vorne um einen bestimmten Winkel geneigt sind. Als besonders geeignet hat sich ein Winkel von etwa 45° herausgestellt. Die Rotationsebene des Messerrades ist dabei die zu der Rotationsachse des Messerrades senkrecht verlaufende Ebene. Die Messerklingen sind von dieser Rotationsebene nach vorne, also zu dem zugeführten, zu häckselnden Ballen hin geneigt, so daß die radial äußeren Enden der Messerklingen in den zu häckselnden Ballen hineinragen. Hierdurch wird ein flächendeckendes Arbeiten gewährleistet. Wenn die Messerklingen senkrecht zur Rotationsebene des Messerrades angeordnet werden würden, würde von dem Ballen kein Material abgeschnitten werden, es würden vielmehr nur Rillen in den Ballen geritzt werden. Wenn die Messerklingen gegenüber der Rotationsebene des Messerrades nicht geneigt wären, also in der Rotationsebene des Messerrades liegen würden, würde eine nur sehr geringe Häckselwirkung erzeugt werden.

Die Messerklingen können auf einer sich in Drehrichtung des Messerrades erweiternden Spirale angeordnet sein. Zur Steigerung der Förderwirkung und des flächenübergreifenden Effektes können die Messerklingen also nicht konzentrisch, sondern sich spiralförmig erweiternd um die Messerrad-Drehachse angeordnet sein. Hierdurch wird die Überdeckung der gesamten zu bearbeitenden Stirnfläche des Ballens verbessert. Ferner wird die radial nach außen gerichtete Förderwirkung der Messerklingen gesteigert.

Das Messerrad kann sich radial nach außen erstreckende Arme aufweisen bzw. aus sich radial nach außen erstreckenden Armen bestehen. Diese Arme bilden ein Fräskreuz, dessen Durchmesser der lichten Weite des Gehäuses entsprechen kann.

In der Mitte des Messerrades kann eine Scheibe vorgesehen sein. Diese Scheibe, die auch als zentrale Scheibe bezeichnet werden kann, verläuft senkrecht zur Drehachse des Messerrades, liegt also in der Rotationsebene des Messerrades. Durch die Scheibe kann ein besser kontrollierter Häckselvorgang bzw. Fräsvorgang erreicht werden. Die Scheibe begrenzt die Schnittiefe der Messerklingen, die vorzugsweise auf der Scheibe angeordnet sind, und dient zur Abstützung des Ballens. Vorzugsweise ist der Durchmesser der Scheibe veränderbar. Der Durchmesser der Scheibe kann also - je nach gewünschter Leistung - durch Auswechseln der Scheibe und Einsetzen einer anderen Scheibe mit anderem Durchmesser variiert werden.

Eine weitere vorteilhafte Weiterbildung ist dadurch gekennzeichnet, daß die Messerklingen, insbesondere die an den Armen vorgesehenen Messerklingen, an Haltern angebracht sind, die mit dem Messerrad bzw. den Armen bzw. der Scheibe verbunden sind. Die Halter können lösbar angebracht sein. Vorteilhaft ist es, wenn die Messerklingen an den Haltern lösbar angebracht sind. Vorzugsweise sind die Messerklingen mit den Haltern verschraubt. Vorteilhaft ist es, wenn die Halter mit dem Messerrad bzw. den Armen bzw. der Scheibe fest verbunden, vorzugsweise verschweißt sind.

Die Messerklingen können dreieckförmig ausgestaltet sein. Die Spitze des Dreiecks weist vorzugsweise radial nach außen. Vorteilhaft ist es, wenn auch auf der in Drehrichtung des Messerrades nachlaufenden Kante des Dreiecks eine Schneide vorgesehen ist.

Nach einer weiteren vorteilhaften Weiterbildung sind die Messerklingen - auf die Drehrichtung des Messerrades bezogen - um einen radial nach außen weisenden Winkel angestellt. Hierdurch wird eine radial nach außen weisende Förderwirkung erreicht. Vorzugsweise ist zumindest ein Teil der Messerklingen um den soeben beschriebenen Winkel angestellt. Vorteilhaft ist es, wenn insbesondere die an den radial außen liegenden Armen vorgesehenen Messerklingen in der beschriebenen Weise angestellt sind.

Eine weitere vorteilhafte Weiterbildung ist dadurch gekennzeichnet, daß die Messerklingen, zumindest ein Teil der Messerklingen, insbesondere die an der Scheibe vorgesehenen Messerklingen, parallel zu der Tangente eines zur Drehachse des Messerrades konzentrischen Kreises angeordnet sind. In dem Bereich, in dem sich derart angeordnete, also nicht - wie oben beschrieben - angestellte Messerklingen befinden, wird die oben erläuterte Förderwirkung nicht erreicht.

Vorteilhaft ist es, wenn an den raidal äußeren Bereichen des Messerrades bzw. der Arme dieses Messerrades keine Messerklingen vorgesehen sind. Diese äußeren Bereiche der Arme, an denen sich keine Messerklingen befinden können, sind vorzugsweise in Drehrichtung des Messerrades um einen bestimmten Winkel nach hinten, also von dem zu verarbeitenden Ballen weg, angewinkelt. Hierdurch entsteht eine Förderwirkung in axialer Richtung, also zu der dem Ballen abgewandten Seite des Messerrades. Die Arme können auch über ihre gesamte Länge in der beschriebenen Weise angewinkelt sein.

Die in Drehrichtung des Messerrades vorlaufenden Kanten, also die Eintrittskanten, der Arme des Messerrades können schräg angeschliffen sein. Vorzugsweise ist der Anschliff schräg nach hinten, also von dem zu verarbeitenden Ballen weg. Hierdurch wird die oben beschriebene Förderwirkung in axialer Richtung nach hinten, also auf die dem Ballen abgewandte Seite des Messerrades, verbessert.

Nach einer weiteren vorteilhaften Weiterbildung ist vor dem Schneidflügelrad bzw. Messerrad eine Vorschubeinrichtung zum Zuführen des Ballens zum Schneidflügelrad bzw. Messerrad vorgesehen. Die Vorschubeinrichtung ist vorzugsweise von einem Vorschubgehäuse umgeben. Diese Vorschubeinrichtung befindet sich vor dem Schneidflügelrad bzw. Messerrad, also auf der dem Ballen zugewandten Seite des Schneidflügelrades bzw. Messerrades.

Die Vorschubeinrichtung besteht vorzugsweise aus einem Kratzboden. Der durch die Vorschubeinrichtung zum Schneidflügelrad bzw. Messerrad zu fördernde Ballen liegt auf dem Kratzboden auf.

Der Kratzboden kann aus einem Bodenblech und horizontalen, quer zur Drehachse des Schneidflügelrades bzw. Messerrades verlaufenden und auf das Schneidflügelrad bzw. Messerrad zu bewegbaren Leisten bestehen. Der Ballen liegt auf dem Bodenblech auf und wird durch die Leisten zum Schneidflügelrad bzw. Messerrad hin gefördert. Neben dem Bodenblech, auf dem der Ballen aufliegt und das deshalb auch als oberes Bodenblech bezeichnet werden kann, kann auch noch ein darunter befindliches unteres Bodenblech vorhanden sein. Der Kratzboden wird durch beide Bodenbleche abgeschirmt. Durch das untere Bodenblech können nicht vom Schneidflügelrad bzw. Messerrad aufgenommene Teile wieder zurückgeführt werden, so daß sie nicht verlorengehen. Die Leisten des Kratzbodens verlaufen horizontal und quer zur Drehachse des Schneidflügelrades bzw. Messerrades, also parallel zu deren Rotationsebene. Der Antrieb der Vorschubeinrichtung bzw. des Kratzbodens bzw. der Leisten erfolgt vorzugsweise hydraulisch. Die Leisten können über die gesamte Breite des Kratzbodens verlaufen und an beiden Enden angetrieben sein, vorzugsweise durch einen Kettentrieb.

Die Vorschubeinrichtung kann von einem Vorschubgehäuse umgeben sein. Vorzugsweise umfaßt das Vorschubgehäuse senkrechte Wände auf beiden Seiten der Vorschubeinrichtung.

Am hinteren Ende des Vorschubgehäuses, also an dem dem Schneidflügelrad bzw. Messerrad abgewandten Ende des Vorschubgehäuses, kann eine Öffnung vorgesehen sein. Durch diese Öffnung kann ein Ballen in das Vorschubgehäuse eingeführt werden.

Die Öffnung des Vorschubgehäuses kann durch eine Klappe verschließbar sein.

Diese Klappe ist vorzugsweise um eine horizontale, quer zur Drehachse des Schneidflügelrades bzw. Messerrades verlaufende Schwenkachse verschwenkbar. Vorteilhaft ist es, wenn die Schwenkachse im unteren Bereich des Vorschubgehäuses liegt, vorzugsweise in der Ebene des Kratzbodens bzw. in der Ebene des oberen Bodenblechs des Kratzbodens. Die Klappe ist vorzugsweise hydraulisch verschwenkbar, und zwar derart, daß das Vorschubgehäuse schließbar ist. Zum Hineinrollen des Ballens wird das Vorschubgehäuse durch eine Verschwenkung der Klappe nach unten geöffnet. Der Ballen kann dann durch Schließen der Klappe in das Vorschubgehäuse hineingerollt werden. Wenn das Vorschubgehäuse durch eine Verschwenkung der Klappe nach oben geschlossen ist, wird ein Herausrollen des Ballens verhindert.

In der Klappe können zwei oder mehr Rollen vorgesehen sein, die um horizontale, quer zur Drehachse des Schneidflügelrades bzw. Messerrades verlaufende Achsen drehbar sind. Die Rollen können etwas über den oberen bzw. innen liegenden Boden der Klappe hinausragen. Sie erleichtern das Hineinrollen des Ballens in das Vorschubgehäuse bei nach unten geschwenkter Klappe.

Nach einer weiteren vorteilhaften Weiterbildung ist an der Oberseite des Vorschubgehäuses in dem an das Schneidflügelrad bzw. Messerrad anschließenden Bereich eine Haube vorgesehen. Die Haube weist vorzugsweise in Richtung nach vorne (also in Richtung von dem Schneidflügelrad bzw. Messerrad weg) nach oben.

Vorzugsweise ist am vorderen, dem Schneidflügelrad bzw. Messerrad abgewandten Ende der Haube eine nach unten weisende Klappe, vorzugsweise eine flexible Klappe, vorgesehen. Vorteilhaft ist es, wenn die flexible Klappe aus einer Gummimatte besteht, die die Haube abdeckt, so daß verhindert wird, daß durch das Schneidflügelrad bzw. Messerrad Materialteile nach außen geschleudert werden. Es kann aber auch eine schwenkbare Klappe vorgesehen sein, deren Schwenkachse vorzugsweise horizontal und quer zur Schneidflügelrad- bzw. Messerrad-Drehachse verläuft.

Nach einer weiteren vorteilhaften Weiterbildung weist das Gehäuse des Schneidflügelrades bzw. Messerrad im Bereich der Vorschubeinrichtung bzw. des Kratzbodens eine Aussparung auf, die vorzugsweise nach unten weist. Es hat sich gezeigt, daß durch diese Maßnahme Verstopfungen und Beschädigungen des Kratzbodens wirksam vermieden werden können.

Eine weitere vorteilhafte Weiterbildung ist dadurch gekennzeichnet, daß zwischen dem Vorschubgehäuse bzw. dessen unterem Bodenblech und der Aussparung ein abgeschrägter Übergang vorgesehen ist. Dieser abgeschrägte Übergang kann durch ein schräges oder auch abgerundetes Blech gebildet werden. Er ermöglicht einen allmählichen Eintritt des Häckselgutes in das Schneidflügelrad bzw. Messerrad, wodurch stoßartige Belastungen vermieden werden.

Vorzugsweise ist im Bereich des Schneidflügelrades bzw. Messerrades über der Vorschubeinrichtung eine Rückhaltevorrichtung angeordnet. Diese Rückhaltevorrichtung kann im wesentlichen aus gehäusefesten Blechen bestehen, die von den Seitenwänden des Gehäuses nach innen ragen. Sie sind vorzugsweise in einem verhältnismäßig geringen Abstand über der Ebene des Kratzbodens angeordnet. Zweckmäßigerweise ist an einer Stelle vor dem Eintritt des Ballens in das Schneidflügelrad- bzw. Messerrad-Gehäuse über dem Kratzboden rechts und links an den Seitenwänden des Vorschubgehäuses je eine Rückhaltevorrichtung angebracht. Diese Vorrichtung verhindert besonders beim Häckseln quaderförmiger Ballen, daß aus dem Ballen größere Stücke ausbrechen und bei Eintritt in das Schneidflügelrad starke Stöße verursachen.

Nach einer weiteren vorteilhaften Weiterbildung ist in der Nähe des Schneidflügelrades bzw. Messerrades über der Vorschubeinrichtung eine weitere Rückhaltevorrichtung angeordnet. Diese weitere Rückhaltevorrichtung ist zweckmäßigerweise auf der dem Schneidflügelrad bzw. Messerrad zugewandten Seite über dem Ballen bzw. Quaderballen angebracht. Sie verhindert, daß der Ballen oder Teile des Ballens durch das rotierende Schneidflügelrad bzw. Messerrad einseitig angehoben oder gar gedreht werden.

Die Wirkung der weiteren Rückhaltevorrichtung kann noch dadurch verbessert werden, daß sie mit gezahnten bzw. sägezahnartigen, auf der weiteren Rückhaltevorrichtung aufrecht stehenden Blechen versehen wird und/oder daß sie geneigt verläuft bzw. geneigt angeordnet ist. Durch diese Maßnahmen wird verhindert, daß von dem Ballen größere Segmente, wie sie durch die Verdichtungshübe beim Pressen entstehen, in das Schneidflügelrad bzw. Messerrad gelangen, die einen ungleichmäßigen Materialfluß und eine ungleichmäßigere Maschinenbeanspruchung zur Folge haben würden.

Zur Anpassung an unterschiedliche Ballengrößen kann die weitere Rückhaltevorrichtung in der Neigung verstellbar und/oder höhenverstellbar sein, beispielsweise mittels Langlöchern.

Vorteilhaft ist es, wenn die Drehachse des Schneidflügelrades und/oder des Messerrades im wesentlichen horizontal verläuft. Es sind aber auch andere Ausgestaltungen möglich. Die Drehachse des Schneidflügelrades und/oder des Messerrades kann auch im wesentlichen vertikal verlaufen. Auch geneigte Anordnungen sind möglich.

Ausführungsbeispiele der Erfindung werden nachstehend anhand der beigefügten Zeichnung im einzelnen erläutert. In der Zeichnung zeigt
- Fig. 1: einen Ballenhäcksler mit Vorschubgehäuse, Kratzboden und hinterer Klappe in einer Seitenansicht,
- Fig. 2: den Ballenhäcksler in einer der Fig. 1 entsprechenden Seitenansicht mit geschlossener hinterer Klappe,
- Fig. 3: den in den Fig. 1 und 2 dargestellten Ballenhäcksler in einer Ansicht von hinten (in der Fig. 1 in Richtung des Pfeiles A, also von rechts),
- Fig. 4: eine vergrößerte Schnittansicht des Ballenhäckslers längs der Linie B-B in Fig. 3 in einer den Fig. 1 und 2 entsprechenden Seitenansicht,
- Fig. 5: das Schneidflügelrad des Ballenhäckslers in einer Ansicht von hinten (entsprechend der Fig. 3),
- Fig. 6a: einen Arm des Schneidflügelrades in einer Seitenansicht,
- Fig. 6b: einen Arm des Schneidflügelrades in einer Schnittansicht längs der Linie C-C in Fig. 5,
- Fig. 7: eine weitere Ansicht des Schneidflügelrades von hinten in einer der Fig. 3 entsprechenden Darstellung,
- Fig. 8: eine Variante des Ballenhäckslers in einer Seitenansicht und
- Fig. 9: die in Fig. 8 dargestellte Variante in einer Ansicht von hinten.

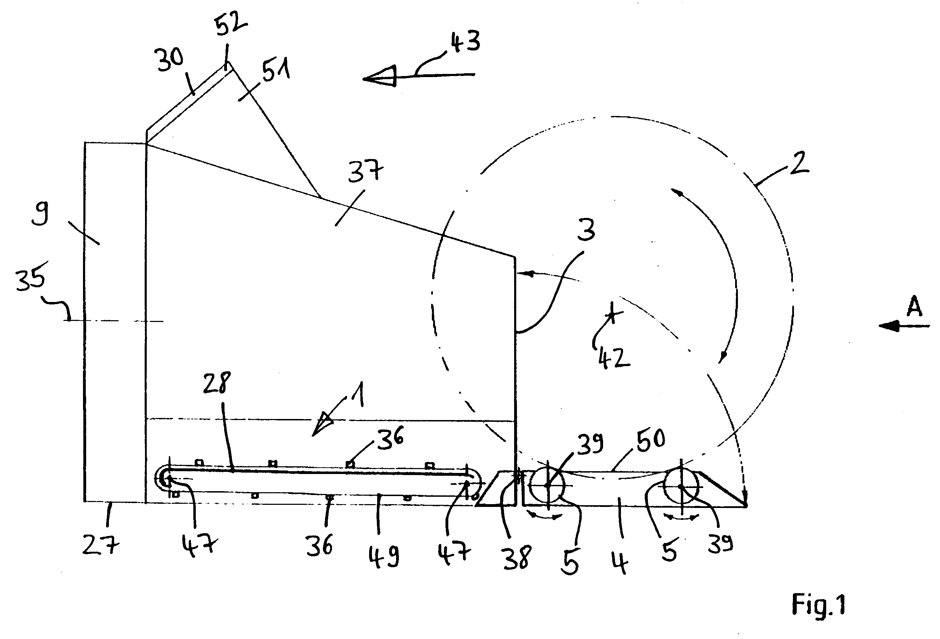

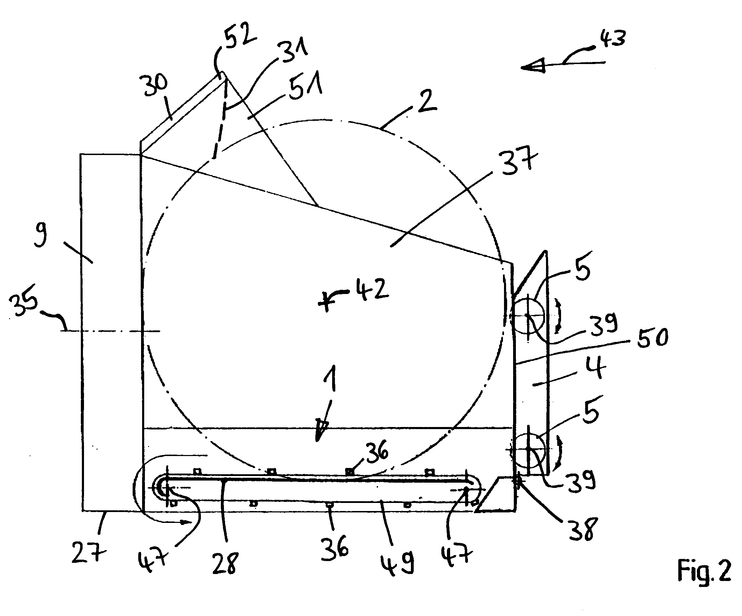

Der in den Fig. 1 und 2 gezeigte Ballenhäcksler besteht aus einem ein Messerrad und ein Schneidflügelrad aufnehmenden Gehäuse 9, einer aus einem Kratzboden 1 bestehenden Vorschubeinrichtung und einem den Kratzboden 1 umgebenden Vorschubgehäuse 37. Der Ballenhäcksler kann hinter einem landwirtschaftlichen Schlepper angebracht werden, vorzugsweise mittels einer - in den Zeichnungen nicht gezeigten - Dreipunktaufhängung. Der Schlepper befindet sich in der Darstellung der Fig. 1 und 2 links von dem Ballenhäcksler. Der Antrieb der in dem Gehäuse 9 untergebrachten Schneidvorrichtung, bestehend aus Messerrad und Schneidflügelrad, erfolgt über eine Gelenkwelle, die an die Drehachse 35 von Messerrad und Schneidflügelrad angeschlossen wird. Der Kratzboden wird vorzugsweise hydraulisch angetrieben.

Der Ballenhäcksler ist geeignet für Ballen in Quaderform oder für zylinderförmige Ballen 2 (Rundballen). Der Ballenhäcksler kann für Ballen aus Stroh, Heu oder Silage eingesetzt werden. Bei Verarbeitung zylinderförmiger Ballen 2, allgemein Rundballen genannt, liegt die Ballenachse 42 horizontal und quer zur Fahrtrichtung 43. Das ergibt bei den heute üblichen Ballenabmessungen eine besonders schmale Bauweise, was insbesondere für den Einsatz in Ställen zur Einstreuung oder Futterdosierung vorteilhaft ist.

In dem Gehäuse 9 ist ein Messerrad 8 um eine im wesentlichen horizontal verlaufende Achse 35 drehbar angeordnet. An dem Messerrad 8 ist eine Vielzahl von Messerklingen 13 oder ähnlichen Schneidwerkzeugen angebracht. Das Messerrad 8 ist an seinem Umfang von dem Gehäuse 9 umgeben.

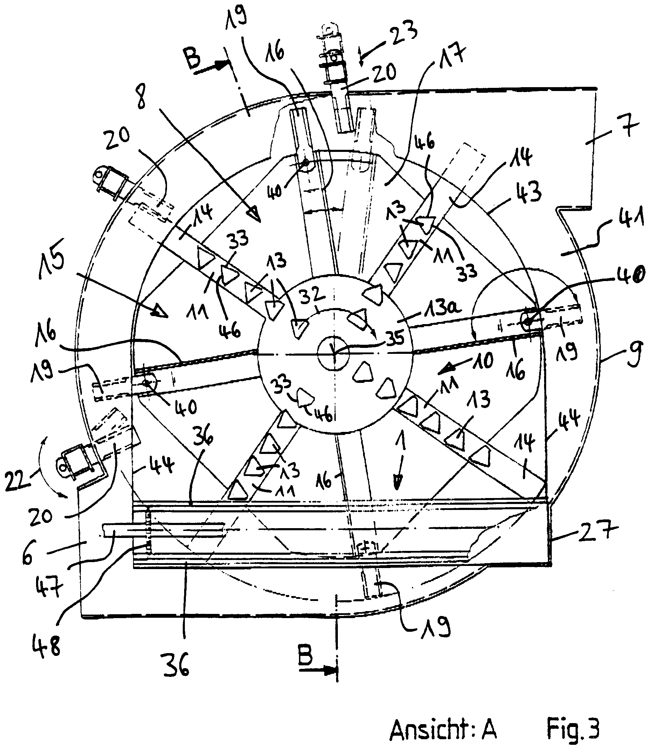

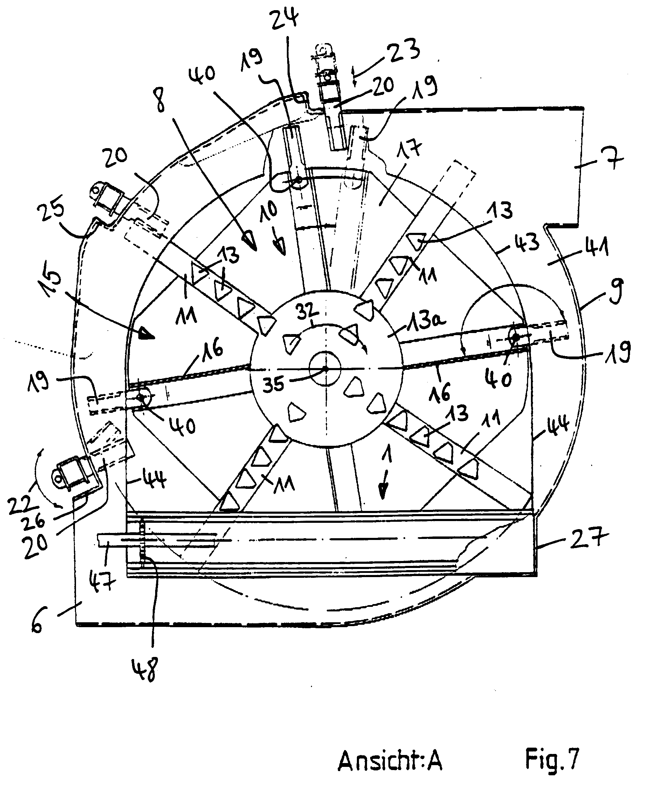

Wie aus den Fig. 3 und 7 ersichtlich, ist in der Mitte des Messerrades 8 eine Scheibe 13a vorgesehen, die senkrecht zur Drehachse 35, also in der Rotationsebene verläuft. Von der Scheibe 13a erstrecken sich vier im Winkelabstand von jeweils 90° angeordnete Arme 11 radial von der Drehachse 35 weg nach außen. Die Arme 11 bilden ein Fräskreuz 10. Der Durchmesser des aus den Armen 11 bestehenden Fräskreuzes 10 entspricht im wesentlichen der lichten Weite des Gehäuses 9. Die lichte Weite des Gehäuses 9 ist geringfügig größer als der Umlaufkreis der Arme 11. In axialer Richtung (die axiale Richtung ist die Richtung der Drehachse 35) vor dem Messerrad 8, also auf der dem Ballen 2 zugewandten Seite des Messerrades 8, ist der im wesentlichen zylindrische Außenmantel des Gehäuses 9 mit einem senkrecht zur Drehachse 35 verlaufenden Frontblech 41 verbunden, das eine verhältnismäßig große Aussparung 43 aufweist, die oberhalb der Drehachse 35 halbkreisförmig ausgestaltet ist und die unterhalb der Drehachse 35 durch zwei vertikale, parallele Kanten 44 gebildet wird, deren Abstand im wesentlichen genauso groß ist wie die Breite des Kratzbodens 1. Das von den Armen 11 gebildete Fräskreuz 10 wirkt so über die gesamte Breite des Kratzbodens 1 abstreifend, wodurch Verstopfungen vermieden werden. Anstelle von vier Armen 11 können auch mehr oder weniger Arme vorgesehen sein, deren Winkelabstand voneinander vorzugsweise jeweils gleich groß ist. Durch das Messerrad 8 erfolgt die Auflösung, Zerkleinerung und Förderung des Ballens bzw. des Ballengutes.

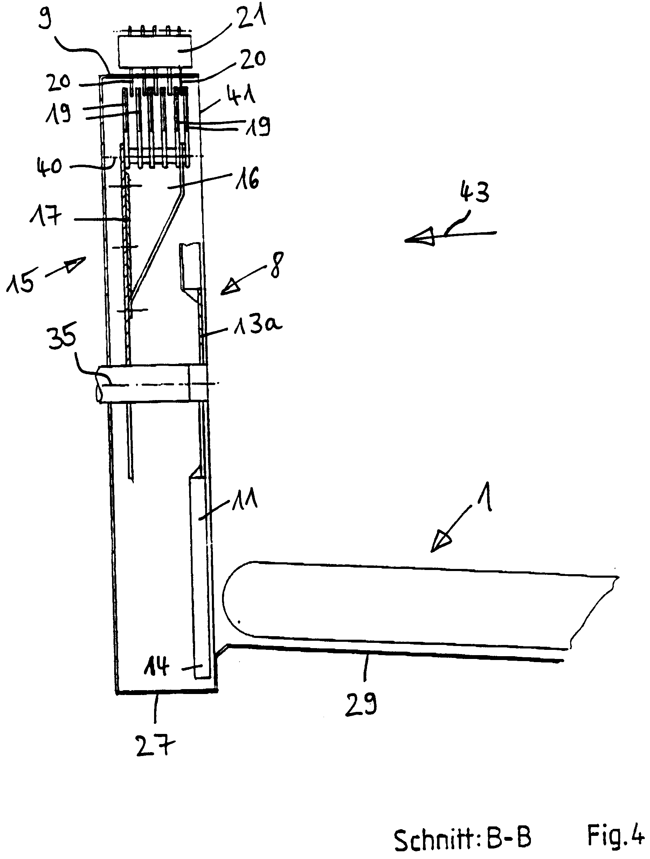

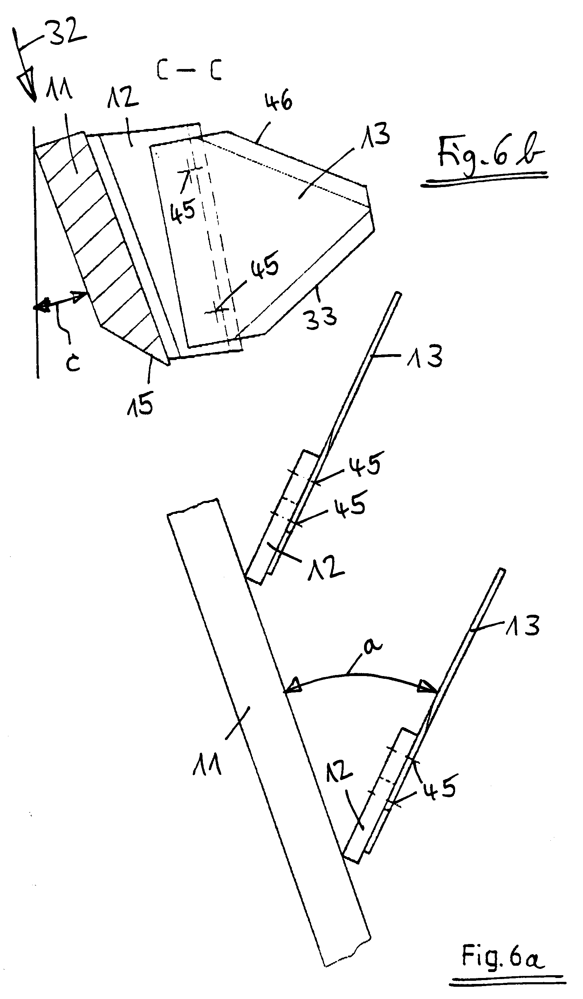

An der Scheibe 13a und an den Armen 11 sind Halter 12 (Fig. 6a und 6b) angeschweißt, an denen die Messerklingen 13 oder ähnliche Schneidwerkzeuge angebracht sind. Jede Messerklinge 13 ist durch zwei Schrauben 45 mit einem zugehörigen Halter 12 verschraubt. Die Messerklingen 13 lösen durch fräsende Einwirkung das Gut von dem Ballen 2 ab. Wie aus Fig. 4 ersichtlich, liegt das Messerrad 8 in axialer Richtung vor dem Schneidflügelrad 15, also auf der dem Ballen (in Fig. 4 rechts) zugewandten Seite des Geläserads 15.

Wie aus den Fig. 3, 5 und 7 ersichtlich, verlaufen die in der Drehrichtung 32 des Messerrades 8 vorlaufenden Schneidkanten 33 der Messerklingen 13 in Richtung radial nach außen in Drehrichtung 32 nachlaufend. Die in Drehrichtung 32 des Messerrades 8 vorlaufenden Schneidkanten 33 sind also in Richtung radial nach außen in Bezug zur Drehrichtung 32 nachlaufend ausgestaltet. Ferner sind die Messerklingen 13 in Richtung radial nach außen von der Rotationsebene des Messerrades 8 nach vorne um einen bestimmten Winkel a geneigt. Dieser Winkel a (Fig. 6a) beträgt vorzugsweise etwa 45°. Die Neigung der Messerklingen 13 ist nach vorne, also zum Ballen hin, ausgeführt. Hierdurch wird ein flächendeckendes Arbeiten gewährleistet. Wenn der Winkel a 90° betragen würde, würde von dem Ballen kein Material abgeschnitten; es würden vielmehr nur Rillen in den Ballen geritzt werden. Wenn die Neigung a nicht vorhanden wäre, wenn der Neigungswinkel a also 0° betragen würde, wäre die Häckselwirkung wesentlich verschlechtert oder überhaupt nicht mehr vorhanden.

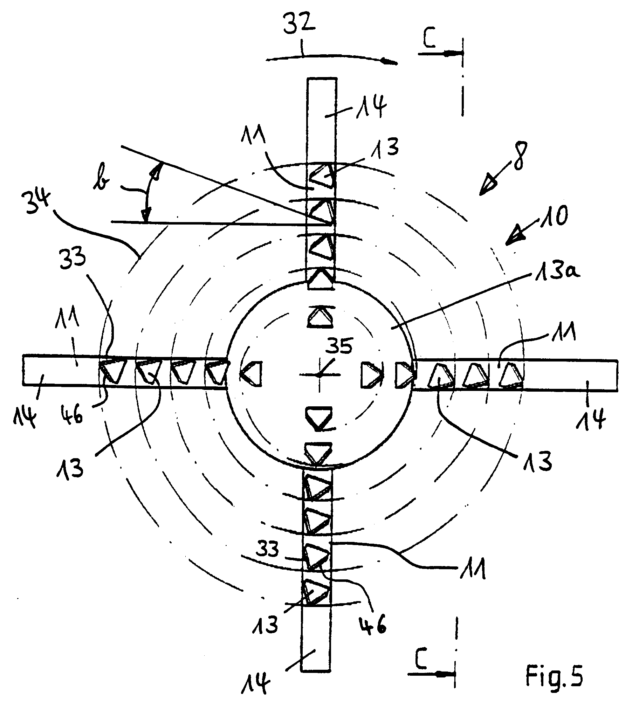

Die Messerklingen 13 sind dreieckförmig ausgestaltet. Sie besitzen eine radial nach außen weisende Spitze. Sowohl auf der in Drehrichtung 32 des Messerrades 8 vorlaufenden Kante 33 der Messerklingen 13 als auch auf deren in Drehrichtung 32 des Messerrades 8 nachlaufenden Kanten 46 ist jeweils eine Schneide vorgesehen. Um eine Förderwirkung des von den Messerklingen 13 abgelösten Gutes in Richtung radial nach außen zu erreichen, sind die auf den Armen 11 befestigten Messerklingen 13 um einen - auf die Drehrichtung 32 des Messerrades 8 bezogen - radial nach außen weisenden Winkel b angestellt (Fig. 5). Die an der Scheibe 13a angebrachten Messerklingen 13 sind nicht in dieser Weise um einen Winkel b nach außen weisend angestellt. Sie sind vielmehr parallel zu der Tangente jeweils eines konzentrischen Kreises angeordnet, so daß die oben beschriebene Förderwirkung in Richtung radial nach außen nicht entsteht.

Zur Steigerung der Förderwirkung in Richtung radial nach außen und des flächenübergreifenden Effektes sind die Messerklingen 13 nicht auf jeweils konzentrischen Kreisen angeordnet, sondern sich spiralförmig erweiternd um die Drehachse 35 angeordnet. Diese Spirale 34 (Fig. 5) erweitert sich in Drehrichtung 32 des Messerrades 8. Bei einer Drehung des Messerrades 8 in Drehrichtung 32 läuft die Linie der Spirale 34 also radial nach außen.

An den radial äußeren Bereichen 14 der Arme 11 sind keine Messerklingen vorgesehen. Die Arme 11 sind über ihre gesamte Länge in Drehrichtung 32 des Messerrades 8 um einen bestimmten Winkel c nach hinten, also von dem zu verarbeitenden Ballen weg, angewinkelt. Hierdurch entsteht eine Förderwirkung in axialer Richtung nach hinten, also auf die dem Ballen abgewandte Seite des Messerrades 8. Zur weiteren Verbesserung dieser Förderwirkung können die Eintrittskanten 15 der Arme 11 schräg angeschliffen werden, und zwar ebenfalls schräg nach hinten, also auf die dem Ballen abgewandte Seite des Messerrades zu. Die vorlaufenden Kanten 15 können auch als Eintrittskanten bezeichnet werden.

Um einen kontrollierten Fräsvorgang zu erreichen, ist in der Mitte des Fräskreuzes 10 zur Abstützung des Ballens 2 und zur Begrenzung der Schnittiefe der Messerklingen 13 die Scheibe 13a angeordnet. Der Durchmesser der Scheibe 13a ist veränderbar, kann also - je nach gewünschter Leistung - variiert werden, und zwar dadurch, daß die vorhandene Scheibe 13a durch eine andere Scheibe mit anderem Durchmesser ausgewechselt wird.

In axialer Richtung vor dem Messerrad 8, also auf der dem Ballen 2 zugewandten Seite des Messerrades 8, ist eine Vorschubeinrichtung 1 zum Zuführen des Ballens 2 bzw. des Häckselguts zum Messerrad 8 vorgesehen. Die Vorschubeinrichtung besteht aus einem an sich bekannten Kratzboden 1, auf dem der zu fördernde und dem Messerrad 8 zuzuführende Ballen 2 aufliegt. Der Kratzboden 1 läuft über ein oberes Bodenblech 28 (Fig. 2). Er wird durch ein unteres Bodenblech 29 (Fig. 4) abgeschirmt. Durch dieses untere Bodenblech 29 werden nicht vom Messerrad 8 aufgenommene Teile wieder zurückgeführt bzw. zurückgefördert, so daß sie nicht verlorengehen.

Über dem Bodenblech 28 sind horizontale, quer zur Drehachse 35 des Messerrades 8 verlaufende und auf das Messerrad 8 zu bewegbare, gleichbeabstandete Leisten 36 angeordnet, die zusammen mit dem Bodenblech 28 den Kratzboden 1 bilden. Die Leisten 36 werden beidseitig durch jeweils einen Kettentrieb angetrieben, der aus zwei Wellen 47 mit jeweils zwei Zahnrädern 48 sowie Ketten 49 besteht.

Auf beiden Seiten des Kratzbodens 1 erstrecken sich seitliche, vertikale Wände nach oben, die den Kratzboden 1 umgeben und ein Vorschubgehäuse 37 bilden. Am hinteren, dem Messerrad 8 abgewandten Ende (Aufgabeende) des Vorschubgehäuses ist eine Öffnung 3 vorgesehen, durch die ein Ballen 2 in das Vorschubgehäuse 37 eingebracht werden kann. Die Beschickung des Ballenhäckslers erfolgt durch diese hintere Öffnung 3. Hierdurch wird eine Ebenerdige Beladung durch Hineinrollen eines Rundballens 2 von Hand ohne Zuhilfenahme eines Hebezeugs ermöglicht.

Die hintere Öffnung 3 des Vorschubgehäuses 37 ist durch eine Klappe 4 verschließbar. Die Klappe 4 ist um eine horizontale, quer zur Drehachse 35 des Messerrades 8 verlaufende Schwenkachse 38 vorzugsweise hydraulisch verschwenkbar. Die Schwenkachse 38 befindet sich im unteren Bereich des Vorschubgehäuses 37, und zwar in der Ebene des Kratzbodens 1 bzw. in der Ebene des oberen Bodenblechs 28 des Kratzbodens 1. Durch eine Verschwenkung der Klappe 4 kann das Vorschubgehäuse 37 geöffnet und geschlossen werden. Während des Häckselvorgangs wird ein Herausrollen des Ballens 2 durch die verschlossene, also senkrecht nach oben verschwenkte (Fig. 2) hintere Klappe 4 verhindert. Wenn sich ein Rundballen 2 in der aus Fig. 1 ersichtlichen Weise auf der in eine horizontale Lage nach unten verschwenkten Klappe 4 befindet, kann er durch Anheben, also Verschwenken der Klappe 4 nach oben in das Vorschubgehäuse 37 hineingerollt werden.

In der Klappe 4 sind zwei Rollen 5 vorgesehen, die um horizontale, quer zur Drehachse 35 des Messerrades 8 verlaufende Achsen 39 drehbar gelagert sind. Die Rollen 5 ragen etwas über den oberen bzw. inneren Boden 50 der Klappe 4, der in der abgeschwenkten Stellung (Fig. 1) im wesentlichen mit dem oberen Bodenblech 28 des Kratzbodens 1 fluchtet, hinaus. Die Rollen 5, auf die ein Rundballen 2 in der aus Fig. 1 ersichtlichen Weise aufgelegt werden kann, ermöglichen eine Drehung des Ballens von Hand und erleichtern damit das Entfernen der Balleneinbindung. Zu diesem Zweck kann der obere Boden 50 der Klappe 4 im Bereich zwischen den Rollen 5 unterbrochen sein.

Das Gehäuse 9 weist in der aus Fig. 7 ersichtlichen Weise im Bereich des Kratzbodens 1 eine nach unten weisende, im Querschnitt im wesentlichen rechteckige Aussparung 27 auf. Durch diese Maßnahme können Verstopfungen und Beschädigungen des Kratzbodens wirksam vermieden werden.

An der Oberseite des Vorschubgehäuses 37 ist in dem an das Messerrad 8 bzw. in dem an das Gehäuse 9 anschließenden Bereich eine Haube 30 vorgesehen, die in Richtung von dem Messerrad weg nach oben weist. Seitlich sind mit den Seitenwänden des Vorschubgehäuses 7 fluchtende Seitenwände 51 vorgesehen. An dem dem Gehäuse 9 abgewandten Ende 52 der Haube 30 ist eine nach unten weisende Klappe 31 vorgesehen. Die Klappe 31 ist als flexible Klappe ausgestaltet. Sie besteht vorzugsweise aus einer Gummimatte. Der Ballen 2 bzw. Rundballen wird oben in der aus Fig. 2 ersichtlichen Weise durch die Haube 30 und die sich der Ballengröße selbstätig anpassende flexible Klappe 31 abgedeckt. Hierdurch wird verhindert, daß durch das Fräskreuz Materialteile herausgeschleudert werden. Anstelle einer flexiblen Klappe kann auch eine um das Ende 52 der Haube 30 schwenkbar gelagerte Klappe vorgesehen sein.

In axialer Richtung hinter dem Messerrad 8, also auf der dem Ballen 2 abgewandten Seite des Messerrades 8, ist ein Schneidflügelrad 15 mit mehreren Schaufeln 16 um die horizontale Drehachse 35 drehbar gelagert. Die Drehachse 35 des Schneidflügelrades 15 ist dieselbe Drehachse wie diejenige des Messerrades 8. Schneidflügelrad 15 und Messerrad 8 sind derart miteinander verbunden, daß sie sich auf derselben Welle gleichsinnig und mit derselben Drehzahl drehen. Schneidflügelrad 15 und Messerrad 8 sind von demselben Gehäuse 9 umgeben. Das Schneidflügelrad 15 besteht aus vier Schaufeln 16, deren Winkelabstand voneinander 90° beträgt. Zwischen jeweils zwei Armen 11 des Messerrades 8 ist eine Schaufel 16 des Schneidflügelrades 15 angeordnet.

Zur Anpassung an unterschiedliche Wurfweiten - je nach Erfordernis und Beschaffenheit des Häckselgutes - ist der von dem Schneidflügelrad 15 erzeugt Luftstrom einstellbar. Zu diesem Zweck sind die Schaufeln 16 des Schneidflügelrades 15 auf einer stirnseitig angeordneten Scheibe 17 schwenkbar angeordnet, und zwar derart, daß die Austrittswinkel der Schaufeln 16 variierbar sind. Zur Variation der Austrittswinkel bzw. Wurfweiten ist eine Drehzahlverstellung nicht wünschenswert, da hierdurch die Schnittvorgänge verändert werden würden. Die Anpassung erfolgt vielmehr durch die Variierung der Austrittswinkel der Schaufeln 16.

Die Schaufeln 16 sind an der Scheibe 17 des Schneidflügelrades 15 schwenkbar angebracht. Sie verlaufen in radialer Richtung geneigt, wobei der Neigungswinkel der Schaufeln 16 veränderbar ist, und zwar durch die erwähnte Verschwenkbarkeit der Schaufeln 16. Die Verschwenkung der Schaufeln 16 erfolgt um eine in deren radial inneren Bereich liegende, parallel zur Drehachse 35 verlaufende Schwenkachse.

An den radial äußeren Enden der Schaufeln 16 sind weitere Schneidwerkzeuge angebracht. Dies ist insbesondere dann vorteilhaft, wenn die Zerkleinerung des Häckselgutes durch die Fräseinwirkung des Messerrades nicht ausreicht. Vorzugsweise sind die Schneidwerkzeuge als Schlegelmesser 19 ausgestaltet. Die Schlegelmesser 19 sind um horizontale, parallel zur Drehachse 35 des Schneidflügelrades 15 verlaufende Achsen 40 schwenkbar bzw. pendelnd gelagert. Auf jeder Achse 40 sind hintereinander mehrere Schlegelmesser 19 jeweils gleichbeabstandet angeordnet. Die Schlegelmesser 19 wirken mit mehreren, am Umfang des Gehäuses 9 ebenfalls jeweils hintereinander angeordneten Gegenschneiden 20 zusammen. Die Gegenschneiden 20 weisen vom Umfang des Gehäuses 9 radial nach innen. Sie können auch als Gegenmesser bezeichnet werden. Um eine gute Häckselwirkung zu erreichen, ragen die Gegenmesser in den Umlaufkreis der Schlegelmesser 19 hinein. Die Gegenschneiden 20 sind in der aus Fig. 4 ersichtlichen Weise jeweils zwischen den Schlegelmessern 19 angeordnet, so daß sie nicht mit diesen zusammenstoßen können. Ferner sind die Gegenschneiden 20 in jeweils einem Messerkasten 21 angeordnet. Über den Umfang des Gehäuses 9 sind mehrere Messerkästen 21 vorgesehen. Die Gegenschneiden 20 sind - wie durch den Doppelpfeil 22 angedeutet - schwenkbar und in verschiedenen Schwenklagen arretierbar. Sie sind ferner - wie durch den Doppelpfeil 23 angedeutet - in radialer Richtung zustellbar. Durch Schwenken der Gegenschneiden 20 kann der Schnittwinkel variiert werden. Durch Zustellen, also Verändern des radialen Abstandes der Gegenschneiden 20 können optimale Schnittverhältnisse eingestellt werden.

In dem Gehäuse 9 sind zwei Auswurföffnungen 6, 7 vorgesehen. Die erste Auswurföffnung 6 ist unten angeordnet. Sie verläuft tangential zum Umlaufkreis des Messerrades 8 und des Schneidflügelrades 15. Die zweite Auswurföffnung 7 ist am oberen Ende des Gehäuses 9 vorgesehen. Die Richtung dieser zweiten Auswurföffnung 7 verläuft ebenfalls tangential zum Umlaufkreis des Messerrades 8 und des Schneidflügelrades 15. Auf diese Weise kann das gehäckselte oder gelockerte Gut rechtsseitig (obere Auswurföffnung 7) oder linksseitig (untere Auswuröffnung 6) ausgeworfen werden. Zur Regulierung der Wurfweite können an den Auswurföffnungen 6, 7 - in der Zeichnung nicht dargestellte - Auswurfkanäle, inbesondere schwenkbare Auswurfkanäle, oder sonstige Leiteinrichtungen angebracht werden.

In Drehrichtung 32 des Schneidflügelrades 15 vor den Gegenschneiden 20 sind radial nach innen weisende, stufenförmige Erhebungen 24, 25, 26 (Fig. 7) vorgesehen. Diese stufenförmigen Erhebungen, die am Umfang des Gehäuses 9 den Gegenschneiden 20 in Drehrichtung 32 vorgeschaltet sind, richten längs geförderte Halme quer und bewirken so eine erhebliche Verbesserung der Häckselwirkung gegenüber einer glatten Gehäusewand. Die Erhebungen 24, 25, 26 können in der aus Fig. 7 ersichtlichen Weise in die Gehäusewand 9 integriert sein. Sie werden durch entsprechende Abkantungen der Wand des Gehäuses 9 gebildet. Es ist aber auch möglicht, statt dessen oder zusätzlich separate Anschläge wie beispielsweise Winkelprofile vorzusehen (in den Zeichnungen nicht dargestellt). Vorzugsweise werden dies Winkelprofile bzw. Winkeleisen aufgeschraubt. Sie können zustellbar ausgestaltet sein, so daß die Tiefe der Erhebungen veränderbar ist.

Wie aus Fig. 4a ersichtlich, kann das Messerrad 8 entfernt werden, wenn die Häckselwirkung des Schneidflügelrades 15 mit den Schlegelmessern 19 ausreicht.

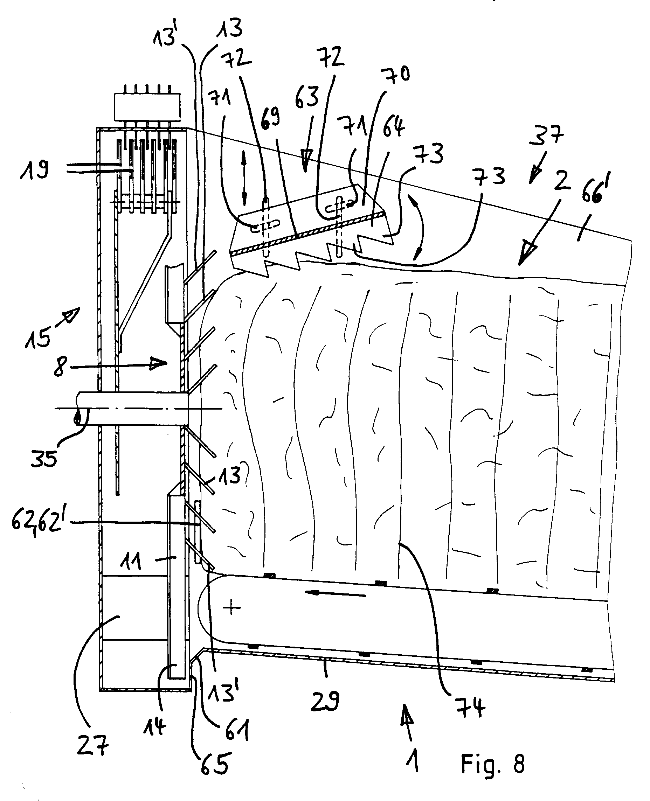

Die Fig. 8 zeigt eine Abwandlung des Ballenhäckslers in einer der Fig. 4 entsprechenden Seitenansicht. Zwischen dem unteren Bodenblech 29 des Vorschubgehäuses 37 und der Aussparung 27 ist ein abgeschrägter Übergang 61 vorgesehen, der einen allmählichen Eintritt des Häckselgutes in das Messerrad 8 bzw. die radial äußeren Bereiche 14 seiner Arme 11 und auch einen allmählichen Eintritt des Häckselgutes in das Schneidflügelrad 15 bzw. die an seinem äußeren Umfang befindlichen Schlegelmesser 19 ermöglicht und auf diese Weise stoßartige Belastungen vermeidet. Der abgeschrägte Übergang 61 besteht aus einem schrägen Blech, welches sowohl mit der Gehäusewand 65 als auch mit dem unteren Bodenblech 29 einen Winkel von etwa 45° einschließt.

Im Bereich des Schneidflügelrades 15 und des Messerrades 8 ist über dem Kratzboden 1 eine Rückhaltevorrichtung 62, 62' angeordnet, die aus zwei vertikalen Blechen besteht, die parallel zur Rotationsebene, also senkrecht zur Drehachse 35, des Messerrades 8 und des Schneidflügelrades 15 verlaufen und die im Abstand vor, also auf der dem Ballen 2 zugewandten Seite des Messerrades 8 liegen. Die die Rückhaltevorrichtung 62, 62' bildenden Bleche sind links und rechts an den Seitenwänden 66, 66' des Vorschubgehäuses 37 befestigt. Sie können auch an den Seitenwänden des Gehäuses 9 angeordnet sein. Die Bleche 62, 62' ragen von den Seitenwänden jeweils nach innen. Ihre Unterkanten 67, 67' verlaufen in einem verhältnismäßig geringen Abstand über dem Bodenblech 28 des Kratzbodens 1.

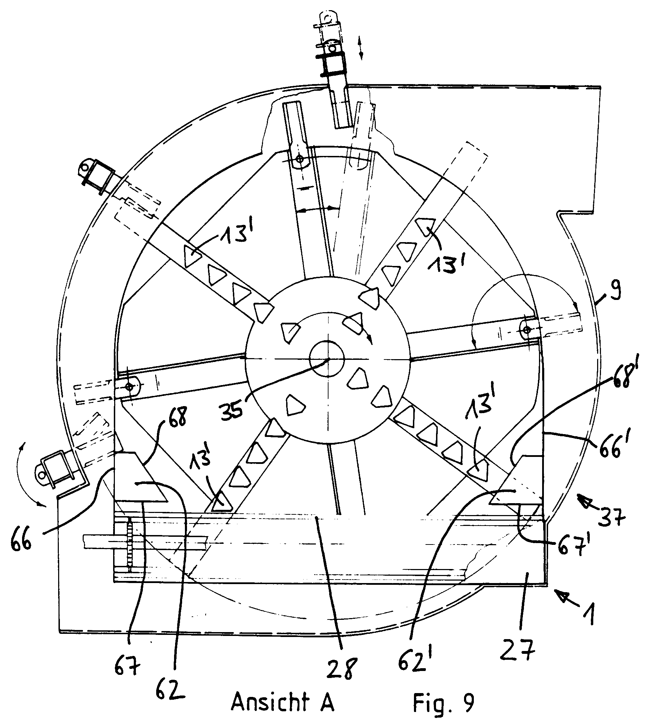

Die Rückhaltebleche 62, 62' sind ferner im Bereich der dem Ballen 2 zugewandten Erstreckung der Messerklingen 13 angeordnet. Sie befinden sich in einer aus der Fig. 9 ersichtlichen Weise außerhalb des Umlaufkreises der äußersten Messerklingen 13', so daß die Messerklingen 13, 13' nicht an den Rückhalteblechen 62, 62' anstoßen können. Zu diesem Zweck sind die radial nach innen weisenden Kanten 68, 68' der Rückhaltebleche 62, 62' abgeschrägt. Sie verlaufen im wesentlichen tangential zur Drehachse 35. Die vor dem Eintritt in das Gehäuse 9 über dem Kratzboden 1 rechts und links an den Seitenwänden 66, 66' des Vorschubgehäuses 37 angebrachten, die Rückhaltevorrichtung bildenden Rückhaltebleche 62, 62' verhindern insbesondere beim Häckseln quaderförmiger Ballen, daß aus dem Ballen 2 größere Stücke ausbrechen und bei Eintritt in das Messerrad 8 sowie in das Schneidflügelrad 15 starke Stöße verursachen.

In der Nähe des Schneidflügelrades 15 bzw. Messerrades 8 ist über der Vorschubeinrichtung 1 eine weitere Rückhaltevorrichtung 63 angeordnet, die in Fig. 8 dargestellt ist. Sie besteht aus einem über die gesamte Breite des Vorschubgehäuses 37 verlaufenden, geneigten, ebenen Blech 69, das an seinen Enden nach oben abstehende Anschlußbleche 70 aufweist, die mit parallel zu dem Blech 69 verlaufenden Langlöchern 71 versehen sind. In den Seitenwänden 66, 66' des Vorschubgehäuses 37 sind an entsprechenden Stellen vertikale Langlöcher 72 vorgesehen. Die Anschlußbleche 70 der weiteren Rückhaltevorrichtung 63 werden durch in der Zeichnung der Fig. 8 nicht dargestellte Befestigungselemente an den Kreuzungspunkten der Langlöcher 71, 72 mit den Seitenwänden 66, 66' des Vorschubgehäuses 37 verschraubt. Durch die im Winkel angeordneten Langlöcher 71, 72 können die Neigung und die Höhe des Blechs 69 der weiteren Rückhaltevorrichtung 63 verstellt werden. Die Fig. 8 zeigt eine bevorzugte Stellung der weiteren Rückhaltevorrichtung 63, in der deren Blech 69 geneigt verläuft, wobei dieses Blech 69 in Richtung des Messerrades 8 und des Schneidflügelrades 15 nach unten verläuft.

An dem Blech 69 der weiteren Rückhaltevorrichtung 63 sind nach unten weisende, vertikale, gezahnte Bleche 64 vorgesehen. Die Zähne 73 sind zum Ballen 2 hin gerichtet. Die weitere Rückhaltevorrichtung 63 befindet sich in dem Bereich des dem Messerrad 8 bzw. Schneidflügelrad 15 zugewandten Endes des Ballens 2. Über die Breite des Blechs 69 können mehrere gezahnte Bleche 64 vorgesehen sein. Es ist ferner möglich, die gezahnten Bleche 64 überwiegend bzw. ausschließlich auf derjenigen Seite vorzusehen, auf der das Messerrad 8 bzw. das Schneidflügelrad 15 nach oben rotiert.

Die weitere Rückhaltevorrichtung 63 verhindert, daß der Ballen 2 oder Teile davon durch das rotierende Messerrad 8 und das rotierende Schneidflügelrad 15 einseitig angehoben oder gar gedreht werden. Diese Wirkung ist dann besonders groß, wenn das Blech 69 der weiteren Rückhaltevorrichtung 63 geneigt angeordnet ist und/oder wenn die auf dem Blech 69 aufrecht stehenden, nach unten weisenden, sägezahnartigen Bleche 64 vorgesehen sind. Durch die weitere Rückhaltevorrichtung wird verhindert, daß von dem Ballen 2 größere Segmente in das Messerrad 8 oder das Schneidflügelrad 15 gelangen. Dies könnte einen ungleichmäßigen Materialfluß und eine ungleichmäßige Maschinenbeanspruchung zur Folge haben. In dem Ballen 2 können größere Segmente insbesondere durch die Verdichtungshübe beim Pressen entstehen. In der Fig. 8 sind die Trennlinien 74 dieser Segmente dargestellt.

Zur Anpassung an unterschiedliche Ballengrößen ist die weitere Rückhaltevorrichtung 63 durch die beschriebenen Langlöcher 71, 72 höhenverstellbar und in der Neigung verstellbar.

## Patentansprüche

1. Ballenhäcksler mit einem in einem Gehäuse (9) umlaufenden Schneidflügelrad (15), welches mit Förderwerkzeugen (16) versehen ist,
dadurch gekennzeichnet,
daß das Schneidflügelrad (15) mit Schneidwerkzeugen (19), vorzugsweise pendelartig angeordneten Schlegelmessern (19), versehen ist.

2. Ballenhäcksler nach Anspruch 1, dadurch gekennzeichnet, daß an dem Gehäuse (9) nach innen ragende Gegenmesser (20) angeordnet sind.

3. Ballenhäcksler nach Anspruch 2, dadurch gekennzeichnet, daß die Gegenmesser (20) in einem oder mehreren Messerkästen (21) angeordnet sind.

4. Ballenhäcksler nach Anspruch 2 oder 3, dadurch gekennzeichnet, daß die Gegenmesser (20) schwenkbar (22) und/oder in radialer Richtung zustellbar (23) sind.

5. Ballenhäcksler nach einem der Ansprüche 2 bis 4, dadurch gekennzeichnet, daß die Gegenmesser (20) in den Messerkreis der Schneidwerkzeuge (19) hineinragen.

6. Ballenhäcksler nach einem der vorhergehenden Ansprüche, dadurch gekennzeichnet, daß in dem Gehäuse (9) radial nach innen weisende, stufenförmige Erhebungen (24, 25, 26) vorgesehen sind, die vorzugsweise in Drehrichtung (32) des Schneidflügelrades (15) vor den Gegenmessern (20) angeordnet sind.

7. Ballenhäcksler nach Anspruch 6, dadurch gekennzeichnet, daß die Erhebungen (24, 25, 26) in die Gehäusewand integriert sind und/oder von gesonderten Anschlägen gebildet werden.

8. Ballenhäcksler nach einem der vorhergehenden Ansprüche, dadurch gekennzeichnet, daß die Schneiden der Schneidwerkzeuge (19) und/oder der Gegenmesser (20) verzahnt sind.

9. Ballenhäcksler nach einem der vorhergehenden Ansprüche, dadurch gekennzeichnet, daß die Förderwerkzeuge (16) als in radialer Richtung geneigt verlaufende Schaufeln ausgestaltet sind.

10. Ballenhäcksler nach Anspruch 9, dadurch gekennzeichnet, daß der Neigungswinkel der Schaufeln (16) veränderbar ist, vorzugsweise dadurch, daß die Schaufeln (16) verschwenkbar sind.

11. Ballenhäcksler nach einem der vorhergehenden Ansprüche, gekennzeichnet durch ein vorzugsweise koaxial zur Drehachse (35) des Schneidflügelrades (15) drehbares Messerrad (8), an dem eine Vielzahl von Messerklingen (13) angebracht ist.

12. Ballenhäcksler nach Anspruch 11, dadurch gekennzeichnet, daß die in der Drehrichtung (32) des Messerrades (8) vorlaufenden Schneidkanten (33) der Messerklingen (13) in Richtung radial nach außen in Drehrichtung (32) nachlaufend verlaufen.

13. Ballenhäcksler nach Anspruch 11 oder 12, dadurch gekennzeichnet, daß die Messerklingen (13) in Richtung radial nach außen von der Rotationsebene des Messerrades (8) nach vorne um einen bestimmten Winkel (a) von vorzugsweise 45° geneigt sind.

14. Ballenhäcksler nach einem der Ansprüche 11 bis 13, dadurch gekennzeichnet, daß das Messerrad (8) sich radial nach außen erstreckende Arme (11) aufweist.

15. Ballenhäcksler nach einem der Ansprüche 11 bis 14, dadurch gekennzeichnet, daß in der Mitte des Messerrades (8) eine Scheibe (13a) vorgesehen ist, deren Durchmesser vorzugsweise veränderbar ist.

16. Ballenhäcksler nach einem der Ansprüche 11 bis 15, dadurch gekennzeichnet, daß die vorzugsweise dreieckförmig ausgestalteten Messerklingen (13), insbesondere die an den Armen (11) vorgesehen Messerklingen (13), auf die Drehrichtung (32) des Messerrades (8) bezogen um einen radial nach außen weisenden Winkel (b) angestellt sind.

17. Ballenhäcksler nach einem der Ansprüche 11 bis 16, dadurch gekennzeichnet, daß an den radial äußeren Bereichen des Messerrades (8) bzw. der Arme (11) keine Messerklingen (13) vorgesehen sind.

18. Ballenhäcksler nach einem der Ansprüche 14 bis 17, dadurch gekennzeichnet, daß die Arme (11) in Drehrichtung (32) des Messerrades (8) um einen bestimmten Winkel (c) nach hinten angewinkelt sind.

19. Ballenhäcksler nach einem der Ansprüche 14 bis 18, dadurch gekennzeichnet, daß die in Drehrichtung (32) des Messerrades (8) vorlaufenden Kanten (15) der Arme (11) schräg angeschliffen sind.

20. Ballenhäcksler nach einem der vorhergehenden Ansprüche, dadurch gekennzeichnet, daß vor dem Schneidflügelrad (15) bzw. Messerrad (8) eine vorzugsweise von einem Vorschubgehäuse (37) umgebene Vorschubeinrichtung (1) zum Zuführen des Ballens (2) zum Schneidflügelrad (15) bzw. Messerrad (8) vorgesehen ist.

21. Ballenhäcksler nach Anspruch 20, dadurch gekennzeichnet, daß die Vorschubeinrichtung aus einem Kratzboden (1) mit einem Bodenblech (28) und horizontalen, quer zur Drehachse (35) des Schneidflügelrades (15) bzw. Messerrades (8) verlaufenden und auf das Schneidflügelrad (15) bzw. Messerrad (8) zu bewegbaren Leisten (36) besteht.

22. Ballenhäcksler nach Anspruch 20 oder 21, dadurch gekennzeichnet, daß am hinteren Ende des Vorschubgehäuses (37) eine durch eine Klappe (4) verschließbare Öffnung (3) vorgesehen ist, wobei in der Klappe (4) zwei oder mehr Rollen (5) vorgesehen sind, die um horizontale, quer zur Drehachse (35) des Schneidflügelrades (15) bzw. Messerrades (8) verlaufende Achsen (39) drehbar sind.

23. Ballenhäcksler nach einem der Ansprüche 20 bis 22, dadurch gekennzeichnet, daß an der Oberseite des Vorschubgehäuses (37) in dem an das Schneidflügelrad (15) bzw. Messerrad (8) anschließenden Bereich eine Haube (30) vorgesehen ist.

24. Ballenhäcksler nach Anspruch 23, dadurch gekennzeichnet, daß am vorderen Ende der Haube (30) eine nach unten weisende Klappe (31), vorzugsweise eine flexible Klappe, vorzugsweise eine Gummimatte, vorgesehen ist.

25. Ballenhäcksler nach einem der Ansprüche 20 bis 24, dadurch gekennzeichnet, daß das Gehäuse (9) im Bereich der Vorschubeinrichtung (1) bzw. des Kratzbodens eine Aussparung (27) aufweist.

26. Ballenhäcksler nach Anspruch 25, dadurch gekennzeichnet, daß zwischen dem Vorschubgehäuse (37) bzw. dessen unterem Bodenblech (29) und der Aussparung (27) ein abgeschrägter Übergang (61) vorgesehen ist.

27. Ballenhäcksler nach einem der Ansprüche 20 bis 26, dadurch gekennzeichnet, daß im Bereich des Schneidflügelrades (15) bzw. Messerrades (8) über der Vorschubeinrichtung (1) eine Rückhaltevorrichtung (62, 62') angeordnet ist.

28. Ballenhäcksler nach einem der Ansprüche 20 bis 27, dadurch gekennzeichnet, daß in der Nähe des Schneidflügelrades (15) bzw. Messerrades (8) über der Vorschubeinrichtung (1) eine weitere Rückhaltevorrichtung (63) angeordnet ist.

29. Ballenhäcksler nach Anspruch 28, dadurch gekennzeichnet, daß die weitere Rückhaltevorrichtung (63) gezahnte Bleche (64) aufweist.

30. Ballenhäcksler nach Anspruch 28 oder 29, dadurch gekennzeichnet, daß die weitere Rückhaltevorrichtung (63) geneigt verläuft und vorzugsweise in der Neigung verstellbar ist.

31. Ballenhäcksler nach einem der Ansprüche 28 bis 30, dadurch gekennzeichnet, daß die weitere Rückhaltevorrichtung (63) höhenverstellbar ist.

32. Ballenhäcklser nach einem der vorhergehenden Ansprüche, dadurch gekennzeichnet, daß die Drehachse (35) des Schneidflügelrades (15) und/oder des Messerrades (8) im wesentlichen horizontal verläuft.

33. Ballenhäcksler nach einem der Ansprüche 1 bis 31, dadurch gekennzeichnet, daß die Drehachse (35) des Schneidflügelrades (15) und/oder des Messerrades (8) im wesentlichen vertikal verläuft.
